# EUROPEAN PATENT APPLICATION

(11) **EP 1 029 824 A2**
(43) Date of publication of application: **23.08.2000**
(21) Application number: 00102326.6
(22) Date of filing: 03.02.2000
(51) Int. Cl.: C02F 5/00, C02F 1/48

(54) **Physical system for the treatment of water and/or other liquids and/or hydrocarbons, gases, suited for preventing the formation of incrustations**

(30) Priority: 15.02.1999 IT VR990015
(71) Applicant: Olivieri, Antonio, 37033 Montorio Veronese (Verona) (IT)
(72) Inventor: Olivieri, Antonio, 37033 Montorio Veronese (Verona) (IT)
(74) Representative: Savi, Alberto

(57) **Abstract**

The present system consists of special measures and equipments by means of which it is possible to prevent the aggregation of the salts dissolved in water and/or other liquids, fluids and/or hydrocarbons, gases, even if they are subjected to heating or cooling processes.
A system according to the present invention comprises basically equipments mounted directly downstream from the feed intake or counter provided by the water supplying institution that manages the water mains or wells or other and the equipments are mounted downstream from the single uses to be covered.

The equipments include magnets (4) arranged in such a way as to be crossed and lapped by the flow of water or the like present in the mains in which such equipments are installed. The aggregation of the salts dissolved in the water is therefore prevented by the action of the magnetic fields.

## Description

The present invention proposes a physical system for the treatment of water and/or other liquids, fluids and/or hydrocarbons, gases or the like. In particular, this system is provided to treat the drinking water for domestic and industrial use in order to prevent and/or reduce the formation of incrustations. The treatment consists in applying static magnetic fields or electromagnetic fields to water. More particularly, the present system consists of central equipments or units to be mounted directly downstream from the feed intake of the net of mains and other equipments or satellites are positioned near the water apparatuses and/or electric household appliances to be protected.

A system according to the present invention is suited to prevent and/or reduce the formation of deposits and incrustations by applying static magnetic fields or electro-magnetic fields to water. In this way, the limestone precipitates in a crystal form and is no more able to adhere to the walls of conduits, coils, water apparatuses or electric household appliances, or the walls of devices crossed by water and/or other liquids, fluids and/or hydrocarbons, gases or the like.

The present equipments create indeed particular magnetic fields in water and/or other liquids, fluids and/or hydrocarbons, gases or the like and thanks to these magnetic fields, the mineral salts dissolved in such liquids precipitate in a crystal form and are no more able to adhere to the walls of the conduits or coils of water heating apparatuses, even if these mineral salts are subjected to the heating or cooling through different forms of energy.

The invention is suited to prevent and/or reduce the formation of deposits and incrustations of calcareous water by precipitating the limestone in a crystal form in water and/or other liquids or fluids and/or hydrocarbons, gases or the like.

As is known, water is enriched during its life cycle by all the substances present in the grounds and strata through which water flows. In particular, such substances include mineral salts. However, some of these salts make water hard.

The hardness of water varies according to the combination of the dissolved salts and therefore, the hardness varies according to the zone. The presence of the salts makes the water richer but causes a greater formation of incrustations and corrosions in pipes and coils of electric household appliances.

In fact, some mineral salts dissolved in water and/or other liquids, fluids and/or hydrocarbons, gases or the like tend to aggregate and adhere to the walls of pipes, coils, functional parts of engines or the like when these fluids are subjected to the usual heating and cooling processes.

As a matter of fact, the salts are beneficial but cause big problems and energy waste.

The same phenomenon occurs in many other liquids and fluids including the hydrocarbons, and also in gases or the like containing mineral salts in different concentrations which aggregate during their heating or more precisely, during their combustion on provoking a greater formation of incrustations and corrosions in pipes and coils of water apparatuses and electric household appliances.

The phenomena of incrustation and corrosion occur on any type of material and above all on conventional metal tubes but also on hoses or copper tubes or on devices generating heat or energy. These phenomena cause the following inconveniences: a considerable impact on the maintenance costs, a reduction of the heating capacity of the water electric household appliances with a consequent reduction of their life, great expenditures for rinse aids, detergents, salts and anti-limestone products, and in general a global energy waste as regards the fuels or the electric sources operating the electric household appliances.

The prior art knows that the passage of water and/or other liquids or fluids through particular equipments reduces the formation of calcareous deposits and permits thus a saving in energy, which eliminates the aforesaid inconveniences at least partially.

In particular, it is advantageous to have water or other liquids or fluids pass through ion exchange softeners or batchers of chemical reagents or reverse osmosis systems, mechanical filters or active charcoal filters or the so-called "physical systems".

The physical systems refer to the installation of equipments for avoiding and/or reducing the formation of incrustations by applying static magnetic fields or electromagnetic fields to water and/or other liquids, fluids or the like.

Thanks to the magnetic fields generated in the water of the plant, the salts dissolved in the water precipitate in a crystal form and do not aggregate any more. The salts remain suspended in the water and flow away naturally even if they are subjected to heating or cooling processes.

However, there is a problem in using the known static magnetic fields because their effectiveness is not complete. In fact, from the known solutions it appears the insufficiency of the installation of an only magnetic equipment at the inlet of the net of mains or, alternatively, the installation of a magnetic equipment at every single apparatus or use to be protected because these solutions only slow down the formation of incrustations but they do not solve the problem at the root.

The purpose of the present invention is to solve the problem of the insufficiency of the known physical systems by means of particular measures in order to prevent the aggregation of the salts dissolved in water and/or other liquids, fluids and/or hydrocarbons, gases or the like, even if they are subjected to heating or cooling processes.

In particular, a system according to the present invention offers advantages as concerns ecology, economy and safety.

Concerning the ecology, there is the advantage that no foreign substance is added to water and therefore, the organoleptic properties of water remain unaltered. The water treated with the present system has therefore a better taste and also food and drink treated with this water have an improved flavour. In addition, the boiling time is reduced and marks do not remain on the surfaces washed with this water. In practice, water maintains its original properties.

Concerning the economy, both the consumption of energy and the maintenance costs are lowered. It is no more necessary to add chemical additives or anti-limestone salts.

Moreover, life of electric household appliances is prolonged and there is a global energy conservation.

Finally, a system according to the present invention guarantees that the treated plant satisfies all the requirements in compliance with the rules of the laws in force, with all the deriving advantages.

The treatment of water and/or other liquids, fluids and/or hydrocarbons, gases or the like according to this invention applies to several fields such as catering services, bakeries and confectioneries, laundries, medical surgeries and dental surgeries, car wash services, and housekeeping.

Another application of the system according to the present invention refers to the cosmetic-trichological services such as hairdressers, cosmetic centres and beauty salons.

These services make a great use of products containing mineral salts and trace elements because as is known these substances are useful in the treatment of imperfections of skin, cutis, scalp and hair stem. The trace elements are considered to be anti-ageing substances which nourish and fortify the aforesaid body parts.

If the aforesaid products are combined with the water treated with the system according to the present invention, it is possible to reach much more satisfactory practical and cosmetic results than those obtained with non-treated water because all the substances, mineral salts and trace elements, which are already contained in it naturally, are totally preserved. In fact, these substances do not disperse inside pipes or thermosanitary systems in the form of incrustations or calcareous deposits.

In particular, if the system according to the present invention is employed in the field of beauty centers and hairdressing, it permits not only a global energy conservation, but also a less consumption of shampoos and balsams as well as a lesser maintenance. In addition, a complete utilization of the mineral salts and trace elements permits to get very good results in hair dyeing because the dyeing is more natural and the colour is faster.

The curling effect of a permanent is improved. The hair is restructured, bright and soft. The treatments for removing the imperfections of cutis, skin and scalp are thus more effective.

All the above-described aims, advantages and functions are reached according to the present invention with a physical system for the treatment of water and/or other liquids, fluids and/or hydrocarbons, gases or the like, suited to prevent the formation of limestone and incr stations, characterized by the fact of utilizing equipments including natural magnets, electromagnets or the like, which equipments are formed by central units and satellites which are positioned directly downstream from the main feed intake and near the peripheral units representing the single uses, respectively.

The equipments according to the invention are always overdimensioned in respect to the actual capacity of the pipes and are provided with mechanical filters both upstream and downstream from each single equipment, which filters filter the ferrous materials or other materials which could settle on the faces of the magnets on which water flows and with time these deposits could cause both a corrosion and an obstruction of the passage.

In addition, there may be devices permitting a rapid attachment and facilitating the connections near the flexible pipes of the apparatuses, uses or electric household appliances so that such equipments may be replaced rapidly, if necessary.

The invention will be better understood now from the following description, set out as an example not limiting the invention itself as well as from the accompanying drawings, wherein:
- Figure 1 shows a schematical view of one of the equipments according to the present invention, from which it appears in transparency the inner part comprising natural magnets;
- Figure 2 shows a schematical view of an equipment according to the present invention, provided with detachable mechanical filters;
- Figure 3 shows a schematical view of the equipment of Figure 2, provided with fixed mechanical filters;
- Figure 4 shows a schematical view of an equipment according to the present invention, this solution being provided with rapid attaching means;
- Figure 5 shows a diagram of a possible arrangement of the equipments according to the invention.

With reference to the accompanying figures, number 1 denotes on the whole one of the equipments for the treatment of water and/or other liquids, fluids and/or hydrocarbons, gases or the like according to the invention. This equipment is mounted directly downstream from a feed intake or counter C provided by the water supplying institution controlling the water mains or wells or other and the equipment is mounted downstream from the single uses to be protected.

The equipment 1 is basically formed by a body or casing 2. The casing shape is usually cylindrical. The casing 2 is provided with threaded attachments 3 which are arranged axially at its two opposite level surfaces, respectively.

Special magnets 4 are put within the cylindrical casing 2. These magnets consist of a proper material, preferably based on rare earths, for instance neodymium-iron-boron, or other equivalent suitable materials. These materials have a high intensity.

Each magnet 4 is subdivided into a subgroup of element.

Each magnet element is coated with Greblon or Teflon or other coating material. The coating material of the elements must be anti-adherent, anti-corrosive, anti-wear and acid proof.

The magnets 4 are supported by suitable spacers (not represented) which hold up the ferrous slags or slags in other material which could be present in the water of the pipe or could come off the pipe.

The magnets 4 are arranged in such a way as to be crossed and lapped by the flow of water of the pipe in which the equipment 1 is installed so that the aggregation of the salts dissolved in the water is prevented by the action of the magnetic field.

The main inventive features of the present invention are the following:
- a special connection between casing 2 and further mechanical filtering units which may be equipped with rapid attachments;
- the modularity of the typologies which are all over-dimensioned in respect to the capacity of the pipes, and above all
- the arrangement of the equipments which are placed directly downstream from the feed intake of the water mains and from the single uses to be protected.

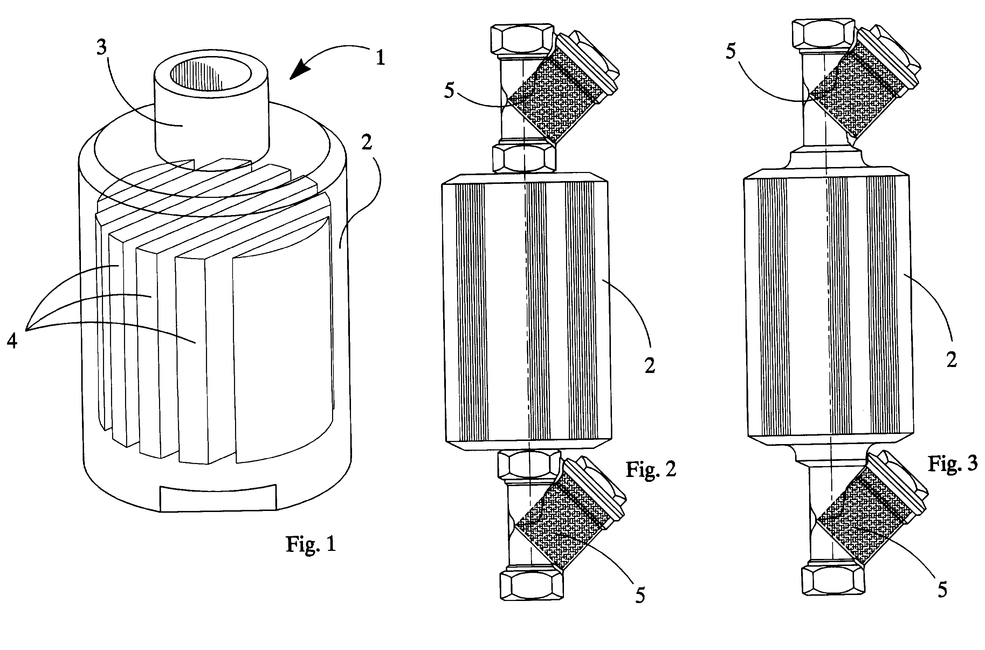

Concerning the first point, as it can be seen in Figures 2 and 3, the casing 2 is coupled at both the inlet and the outlet with mechanical filters indicated with 5.

The mechanical filters 5 may be fixed on the respective attachments (Fig. 3) or may be screwed onto them (Fig. 2) according to the need.

The mechanical filters are additional elements for retaining the slags which may be present in the pipe water. In fact, these filters filter the water and retain the ferrous materials and other materials. So, these materials do not collect on the faces of the magnets through which water flows. Such slags or deposits could otherwise obstruct the passage of both the magnetic equipments 1 and the inner components of the eletric household appliances in question as time goes by.

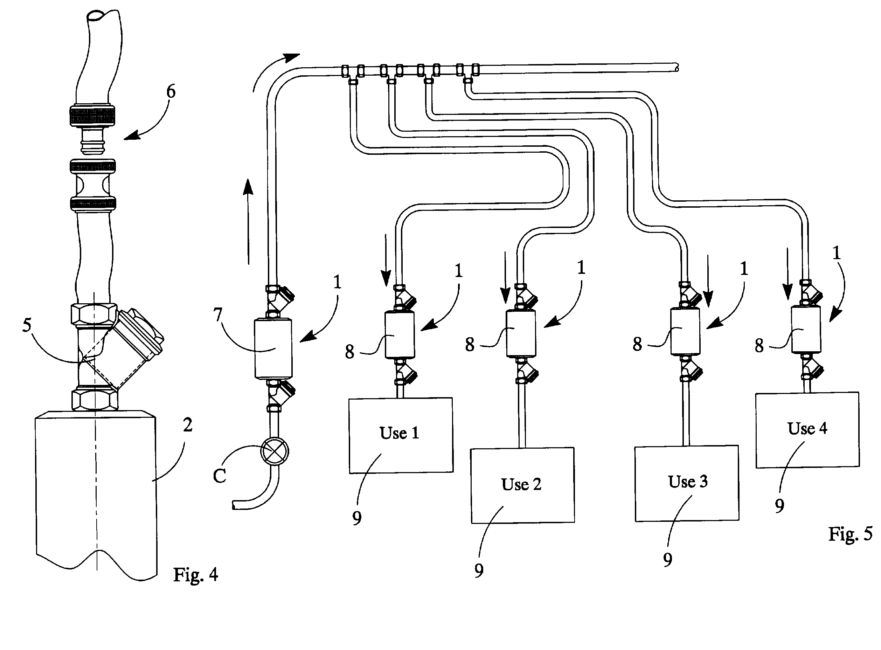

In case the service concerns electric household appliances connected with hoses or pipes made of different materials, there is the possibility of mounting rapid attachments 6 (represented by way of example in Figure 4). These rapid attachments facilitate the mounting of the magnetic equipments.

Moreover, the equipments are modular and overdimensioned modules are applied on each pipe. For instance, if standardized equipments are carried out with modules of 3 inches or 1 inch, an equipment of 3 inches is to be installed in pipes of 2 inches while an equipment of 1 inch is to be installed in a pipe of ³/4 of inch.

In this way, the water can pass through more high intensity magnetic fields in order to safely prevent the formation of aggregations of the salts dissolved in the water, which aggregations cause the formation of limestone.

Another aspect characterizing the present invention refers to the distribution of the several magnetic units.

In fact, the action is more effective according to the invention when a magnetic equipment or central unit 7 is installed directly downstream from the feed intake of the net of mains and further magnetic equipments and satellites 8 are installed near the single uses 9.

It is evident that the dimensions and capacity of the central unit 7 are greater than those of the satellites 8 since the feed mains have a greater capacity than the pipes serving the single uses 9.

The single uses 9 may be represented by boilers, dishwashers, washing machines, glass washers, steam ovens, or other apparatuses or electric household appliances using water as well as engines or other devices for the production of heat or energy, which devices are crossed or fed by hydrocarbons, gases or the like, and any substance containing mineral salts in different concentrations.

In all the above-described cases, magnetic equipments are always mounted with overdimensioned modules so that water and/or other liquids, fluids and/or hydrocarbons, gases or the like may cross high intensity magnetic fields. In this way, it is possible to safely avoid the aggregations of the dissolved salts forming the limestone since the higher the magnetic field crossed by water or the like, the safer its anti-limestone treatment.

The mineral salts dissolved in water and/or other liquids, fluids and/or hydrocarbons, gases or the like do not aggregate if they are treated as described above and therefore such salts do not disperse in the form of incrustations of pipes or coils of the served apparatuses, or in the combustion chambers of engines or machines used for the production of heat and energy. In fact, the salts remain in suspension in the liquid and are naturally discharged from the outlets.

Advantageously, the magnetic fields obtained by using natural magnets on the aforesaid apparatuses may be obtained also artificially by using electromagnetic systems or other systems suited to the production of magnetic fields through induction.

An expert of the field may propose some variants of the system, described and represented by way of example, ahd obtain solutions which are to be considered as included in the scope of protection of the present invention, as defined by the following claims.

## Claims

1. A physical system for the treatment of water and/or other liquids, fluids and/or hydrocarbons, gases or the like, suited to prevent and/or reduce the formation of limestone incrustations, characterized by the fact of utilizing an equipment (1) including natural magnets, eletromagnets or the like (4), which system is formed by central units (7) and satellites (8) which must be positioned directly down from the main feed intake C and near the peripheral units representing the single uses (9), respectively, and that such equipments are overdimensioned in respect to the actual capacity of the pipes.

2. A physical system for the treatment of water or the like as claimed in claim 1, characterized by the fact that the body (2) or each equipment (1) is coupled at the inlet and outlet with mechanical filters (5) which may be screwed and/or fixed to the respective attachments (3), otherwise the mechanical filters may be screwed on them according to the need.

3. A physical system for the treatment of water or the like as claimed in the foregoing claims, characterized by the fact that each equipment (1) may be provided with rapid attachments (6) for facilitating the connections near the hoses of the electric household appliances.

4. A physical system for the treatment of water or the like as claimed in the foregoing claims, characterized by the fact that each equipment (1) consists basically of a cylindrical casing (2) in which there are provided special magnets (4), made of a suitable material, preferably based on rare earths, for instance neodymium-iron-boron, or other equivalent materials having a high intensity.

5. A physical system for the treatment of water or the like as claimed in the foregoing claims, characterized by the fact that the magnets (4) are subdivided into a subgroup of elements, each of which is coated with Greblon or Teflon or other coating material, which has to be anti-adherent, anti-corrosive, anti-wear and acid proof, and the magnets are supported by suitable spacers which act as holding and locking means.

6. A physical system for the treatment of water or the like as claimed in the foregoing claims, characterized by the fact that the magnetic fields may be obtained also artificially by using electromagnetic systems or other systems suited to the production of magnetic fields through induction.

7. A physical system for the treatment of water or the like as claimed in the foregoing claims, characterized by the fact that all the equipments (1) are modular and overdimensioned modules are applied in proportion to each pipe so that water or the like is able to pass through more high intensity magnetic fields to safely avoid the formation of aggregations of dissolved salts, which aggregations cause the formation of limestone.

8. A physical system for the treatment of water or the like as claimed in the foregoing claims, characterized by the fact that a main magnetic equipment or central unit (7) is installed directly downstream from the feed intake C of the net of mains and further equipments or satellites (8) are installed near the single uses (9) to be protected.
